# EUROPEAN PATENT SPECIFICATION

(11) **EP 0 566 383 B1**
(45) Date of publication and mention of the grant of the patent: **18.06.1997**
(21) Application number: 93302892.0
(22) Date of filing: 14.04.1993
(51) Int. Cl.: G03B 9/06

(54) **Diaphragm device**
Blenden-Mechanismus
Dispositif de diaphragme

(30) Priority: 15.04.1992 JP 95056/92
(43) Date of publication of application: 20.10.1993
(73) Proprietor: MATSUSHITA ELECTRIC INDUSTRIAL CO., LTD., Kadoma-shi, Osaka-fu 571 (JP)
(72) Inventor: Yoneyama, Masayuki, Takatsuki-shi, Osaka-fu 569 (JP); Yamamoto, Yasutoshi, Katano-shi, Osaka-fu 576 (JP); Okayama, Hiroaki, Hirakata-shi, Osaka-fu 573 (JP); Ono, Syusuke, Takatsuki-shi, Osaka-fu 569 (JP)
(74) Representative: Crawford, Andrew Birkby

(56) References cited:
- US-A- 4 113 359
- PATENT ABSTRACTS OF JAPAN vol. 14, no. 345 (P-1083)26 July 1990 & JP-A-02 123 335
- PATENT ABSTRACTS OF JAPAN vol. 14, no. 253 (P-1054)30 May 1990 & JP-A-02 067 530

## Description

### BACKGROUND OF THE INVENTION

### 1. Field of the Invention

The present invention relates to a diaphragm device to be used in adjustment of quantity of light of a video camera or the like possessing opto-electric converting means.

### 2. Description of the Prior Art

A diaphragm is used in an image pickup device such as a video camera. The diaphragm is used for obtaining a proper quantity of light by curtailing the quantity of light if the quantity of incident light is excessive.

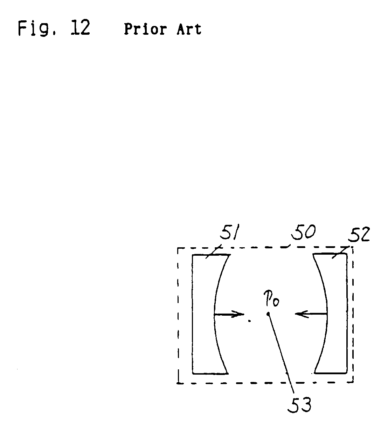

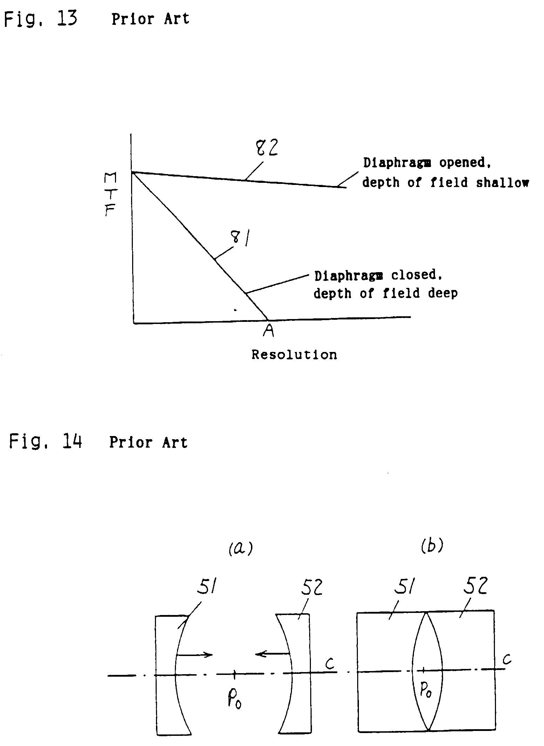

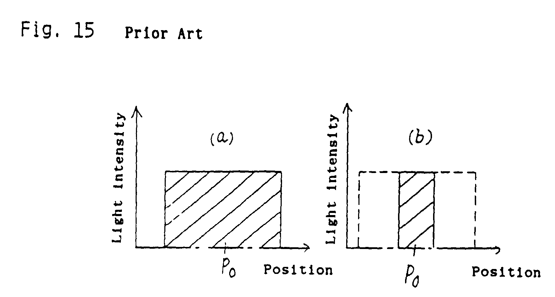

Fig. 12 shows an example of a conventional diaphragm 50 as seen from the direction of its optical axis 53. The conventional diaphragm 50 has a plurality of diaphragm plates, for example, a first diaphragm plate 51 and a second diaphragm plate 52, so as to adjust the quantity of the passing light. Fig. 14 shows states of the conventional diaphragm. The diaphragm is opened in Fig. 14 (a), and closed in Fig. 14 (b). The distribution of quantity of passing light on a horizontal line C perpendicularly crossing the optical axis at a center position P₀ in Fig. 14 is indicated by the shaded area in Fig. 15 (a) when the diaphragm is opened and in Fig. 15 (b) when the diaphragm is closed. Fig. 13 shows the MTF (modulation transfer function) of the light transmitting through the diaphragm by the conventional diaphragm 50, in which the axis of abscissas denotes the resolution, and the axis of ordinates represents the MTF. When the diaphragm is closed, the MTF is 81, and the depth of field is deep. When the diaphragm is opened, the MTF is 82, and the depth of field is shallow.

In the conventional diaphragm 50, as shown in Fig. 13, the MTF characteristic varies between MTF 81 when the diaphragm is closed and MTF 82 when the diaphragm is opened due to MTF deterioration by refraction. In particular, when the diaphragm is closed, the MTF in the high resolution region deteriorates, and the characteristic of MTF 81 is decreased to 0 at the resolution A. Besides, when using a solid-state image pickup device such as a CCD (charge coupled device) as image pickup device and executing electronic shutter drive, the quantity of electric charges can be varied to obtain the same effect as by using the diaphragm equivalently. However, when the quantity of incident light is large, a false signal called smear is generated. Furthermore, as the dynamic resolution rises and an unnatural impression appears in the image of a moving object, and the depth of field becomes shallow. These problems are serious matters in the cameras for consumer use incorporating small CCDs and high-definition TV cameras requiring high resolution, in particular.

On the other hand, diaphragm devices comprising at least one diaphragm plate including an ND filter are known, see for instance US-A-4,113,359.

An object of the present invention is to provide a diaphragm device which can avoid deterioration of MTF characteristic and maintain a depth of field.

According to the present invention there is provided a diaphragm device comprising a diaphragm which comprises a pair of diaphragm plates movable relative to each other, and drive means for driving the diaphragm plates,
wherein at least a part of at least one of the diaphragm plates constitutes an ND filter for causing a difference between the quantity of light passing through the central part and that passing through the peripheral part of the diaphragm,
characterised in that the ND filter varies its transparency ratio accross its surface.

### BRIEF DESCRIPTION OF THE DRAWINGS

Fig. 1 is a structural drawing showing an embodiment of a diaphragm of the invention.

Fig. 2 is a light intensity diagram of transmitted light by the diaphragm of the invention.

Fig. 3 is a block diagram of a video camera apparatus using the diaphragm of the invention.

Fig. 4 is an MTF characteristic diagram by a diaphragm.

Fig. 5 is a structural drawing showing a diaphragm, and a light intensity diagram of transmitted light by the diaphragm.

Fig. 6 is a structural drawing showing another embodiment of the diaphragm of the invention.

Fig. 7 is a light intensity diagram of transmitted light by the diaphragm in Fig. 6.

Fig. 8 is an MTF characteristic diagram by the diaphragm in Fig. 6.

Fig. 9 is a structural drawing showing a different embodiment of the diaphragm of the invention.

Fig. 10 is a light intensity diagram of transmitted light by the diaphragm in Fig. 9.

Fig. 11 is an MTF characteristic diagram by the diaphragm in Fig. 9.

Fig. 12 is a structural drawing of a conventional diaphragm.

Fig. 13 is an MTF characteristic diagram by the conventional diaphragm.

Fig. 14 is a structural drawing showing a method of use of the conventional diaphragm.

Fig. 15 is a light intensity diagram of transmitted light by the conventional diaphragm.

### DESCRIPTION OF THE PREFERRED EMBODIMENTS

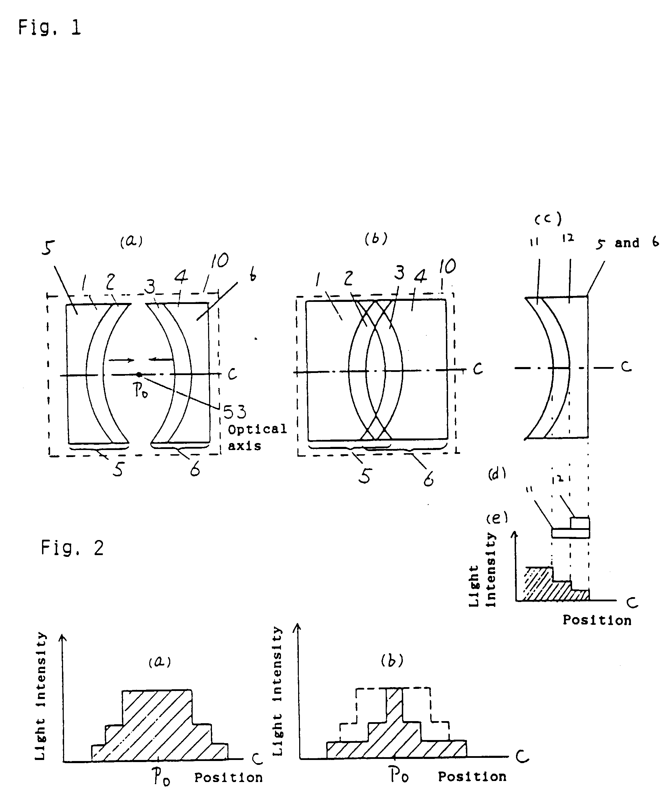

Referring now to the drawings, preferred embodiments of diaphragms of the invention will be explained herein. Fig. 1 is a structural drawing showing an embodiment of a diaphragm 10 of the invention as seen from the direction of the optical axis 53. In Fig. 1 (a), a first diaphragm plate 5 and a second diaphragm plate 6 are disposed oppositely with respect to an optical axis 53 and movably toward and away from each other between an open position as shown in Fig. 1 (a) and a closed position as shown in Fig. 1 (b). The first diaphragm plate 5 consists of an outer side ND filter (neutral density filter) 1 of high density (i.e., transparency ratio is low) and an inner side ND filter 2 of low density (i.e., transparency ratio is high), while the second diaphragm plate 6 consists of an outer side ND filter 4 of high density and an inner side ND filter 3 of low density. When the first diaphragm plate 5 and second diaphragm plate 6 move toward each other, i.e., in the direction toward the optical axis 53 (center position P₀), the state becomes as shown in Fig. 1 (b). Each of the first and second diaphragm plates 5 and 6 are composed as shown in Fig. 1 (c) and Fig. 1 (d). The cross-sectional view of the diaphragm plate along the line C in Fig. 1 (c) is shown in Fig. 1 (d). The intensity of transmitted light on the line C is shown in Fig. 1 (e). The line C is the horizontal line crossing the center position P₀ and perpendicular to the optical axis 53. As shown in Fig. 1 (d), two ND filters 11 and 12 are overlaid to partly overlap each other so that the overlapped portion becomes the high density ND filter. The distribution of quantity of transmitted light on the line C in the diaphragm of the invention shown in Fig. 1 is given in Fig. 2 by correspondence with Fig. 1. The distribution of quantity of transmitted light becomes as shown in Fig. 2 (a) when the diaphragm is open, and as shown in Fig. 2 (b) when the diaphragm is closed. The dotted line in Fig. 2 (b) shows the distribution of quantity of light in Fig. 2 (a) when the diaphragm is open. The quantity of transmitted light is adjusted so as to be smaller in the peripheral part of the luminous flux than in the central part.

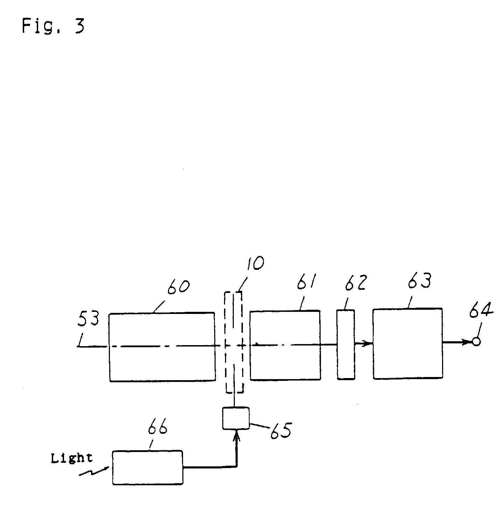

Fig. 3 shows an example of an image pickup device using the diaphragm of the invention. In Fig. 3, the incident light passing through a first lens system 60 which collects light from an object undergoes adjustment of quantity of light in the diaphragm 10 comprising movable plural diaphragm plates of the invention, and passes through a second lens system 61 which collects light from an object and undergoes opto-electric conversion in an opto-electric conversion device 62 to be converted to an electric signal which is processed in a camera process unit 63, and is sent out to an output terminal 64. The quantity of incident light is detected by a light quantity detector 66, and a signal depending on the quantity of light is fed into a diaphragm drive unit 65 to adjust the quantity of light by passing through the diaphragm by driving the diaphragm plates of the diaphragm 10. That is, it is not necessary to modify the other parts of the image pickup device except that the diaphragm of the invention is used.

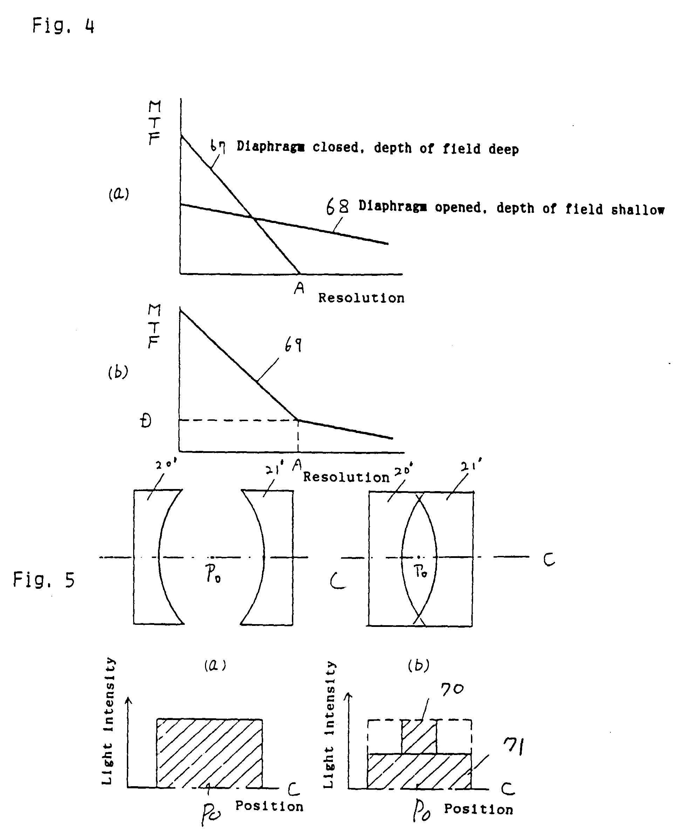

Fig. 5 is a structural drawing showing a diaphragm not covered by the present invention and a light intensity diagram of transmitted light. In Fig. 5, a first diaphragm plate 20' and a second diaphragm plate 21' are disposed oppositely with respect to center position P₀ and movably toward and away from each other between an open position as shown in Fig. 5 (a) and a closed position as shown in Fig. 5 (b). Each of the first and second diaphragm plates 20' and 21' consists of an ND filter. The distribution of quantity of transmitted light becomes as shown in Fig. 5 (a) when the diaphragm is open, and as shown in Fig. 5 (b) when the diaphragm is closed. The MTF characteristics corresponding to the distribution of quantity of transmitted light in Fig. 5 (b) are shown in Figs. 4 (a) and 4 (b). Numeral 67 in Fig. 4 (a) shows the MTF characteristic in which the depth of field is deep and the high frequency component deteriorates to be 0 at resolution A, according to the distribution of quantity of transmitted light shown by numeral 70 in Fig. 5 (b), and 68 in Fig. 4 (a) is the MTF characteristic in which the depth of field is shallow and the deterioration of high frequency component is small, according to the distribution of quantity of transmitted light shown by 71 in Fig. 5 (b). The combined characteristic of 67 and 68 in Fig. 4 (a) becomes 69 in Fig. 4 (b), in which a finite MTF value D is obtained, not becoming 0 at resolution A, so that the high frequency characteristics can be improved.

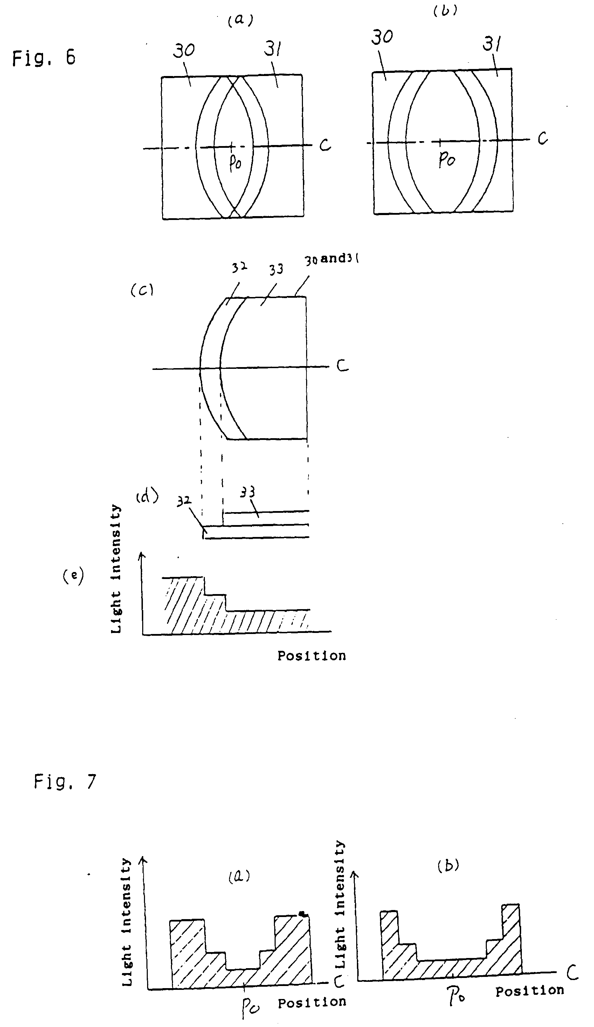

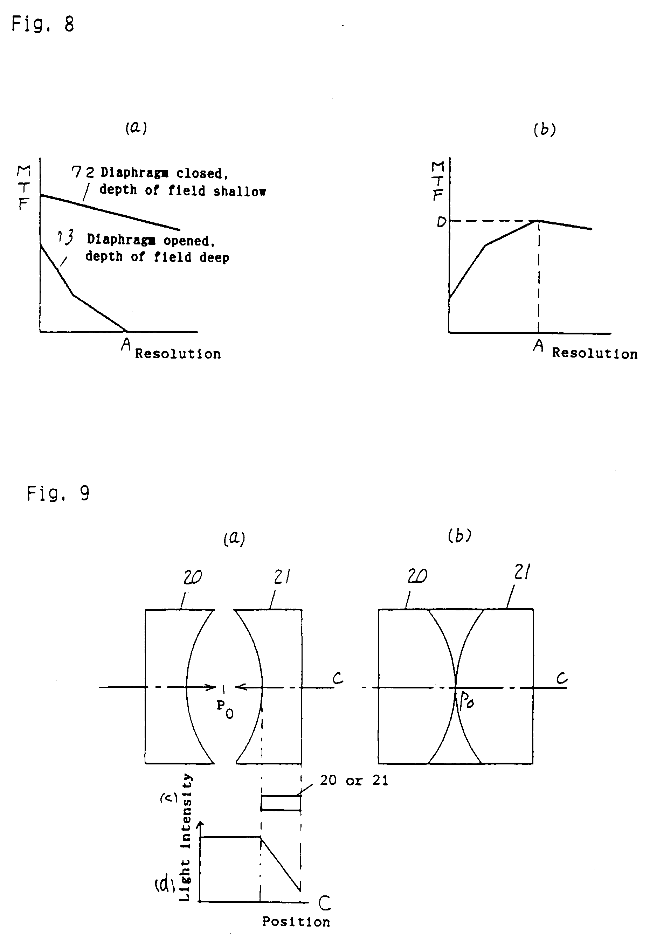

Fig. 6 is a structural diagram showing another embodiment of the diaphragm of the invention. In Fig. 6, in the same constitution as the diaphragm in Fig. 1, a first diaphragm plate 30 and a second diaphragm plate 31 are composed of ND filters varying in density in steps. The first diaphrag plate 30 and the second diaphragm plate 31 are disposed oppositely with respect to center position P₀ and movably toward and away from each other between an open position as shown in Fig. 6 (a) and a closed position as shown in Fig. 6 (b). Fig. 6 (a) shows the diaphragm is open, and Fig. 6 (b) shows the closed state. Each of the diaphragm plates 30 and 31 is composed as shown in Fig. 6 (c). The cross-sectional view of the diaphragm plate along the line C in Fig. 6 (c) is shown in Fig. 6 (d). The intensity of transmitted light on the line C is shown in Fig. 6 (e). As shown in Fig. 6 (d), two ND filters 32 and 33 are overlaid to partly overlap each other so that the overlapped portion becomes the low density ND filter. The distribution of quantity of transmitted light on the line C in the diaphragm of the invention in Fig. 6 is given in Fig. 7 by correspondence with Fig. 6. The distribution of quantity of transmitted light becomes as shown in Fig. 7 (a) when the diaphragm is open, and as shown in Fig. 7 (b) when the diaphragm is closed. As shown in Fig. 7, in the diaphragm closed state, the quantity of light in the middle of the luminous flux is lower as compared with the peripheral part. The MTF profiles by the distribution of quantity of transmitted light in Fig. 7 (b) are shown in Fig. 8 (a) and Fig. 8 (b). Specifically, numeral 73 in Fig. 8 (a) indicates MTF characteristic in which the diaphragm is open and the depth of field may be set deeper but becomes 0 at resolution A. Numeral 72 in Fig. 8 (a) indicates MTF characteristic in which the depth of field is shallow and deterioration of high frequency component is small. The combined characteristic of numerals 73 and 72 in Fig. 8 (a) is as shown in Fig. 8 (b), in which a finite MTF value D is obtained without becoming 0 at resolution A, so that the high frequency components are improved. In this case, however, the low frequency components are suppressed.

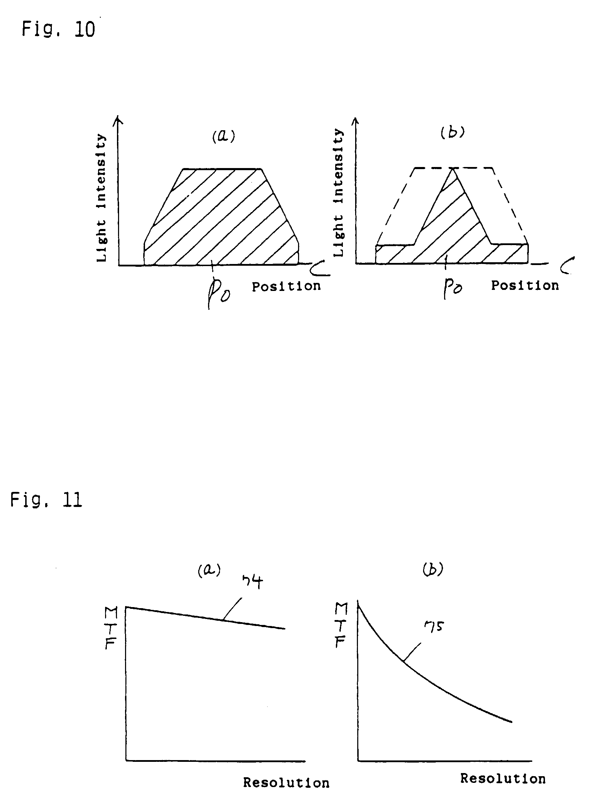

Fig. 9 is a structural diagram showing a different embodiment of the diaphragm of the invention. In Fig. 9, different from the diaphragm in Fig. 1, a first diaphragm plate 20 and a second diaphragm plate 21 are composed of ND filters gradually varying in density (i.e., transparency ratio varies along the line (C)). The first diaphragm plate 20 and the second diaphragm plate 21 are disposed oppositely with respect to center position P₀ and movably toward and away from each other between an open position as shown in Fig. 9 (a) and a closed position as shown in Fig. 9 (b). In Fig. 9 (a), the diaphragm is open, and the diaphragm is closed in Fig. 9 (b). Fig. 9 (c) shows the cross-sectional view of the diaphragm plate along the line C in Fig. 9 (a). Fig. 9 (d) shows the intensity of transmitted light on the line C in Fig. 9 (a). The distribution of quantity of transmitted light becomes as shown in Fig. 10 (a) when the diaphragm is open, and as shown in Fig. 10 (b) when the diaphragm is closed. As shown in Fig. 10, in the diaphragm closed state, the quantity of light is gradually decreased from the middle part to the peripheral part of the luminous flux. The MTF profiles by the distribution of quantity of transmitted light in Fig. 10 (b) is shown in Fig. 11 (a) and Fig. 11 (b). As shown in Fig. 11 (b), the MTF characteristic is not a polygonal curve as shown in Fig. 4 (b), but shows a smooth profile.

The diaphragms using only the ND filter were described, but the conventional diaphragm plate and the diaphragm plate using the ND filter of the invention may be used in combination. Besides, the diaphragm plates of the conventional diaphragm may be combined with the gradient ND filter varying in density in steps or gradually.

In the above description, moreover, the diaphragm of the invention is placed between the first lens system 60 and second lens system 61, but the place of installation is not particularly defined as far as it is at the object side from the opto-electric conversion device 62 in Fig. 3.

In the foregoing embodiments, meanwhile, a pair of the diaphragm of the invention is used, but two or more pairs of the diaphragms may be used simultaneously in the optical system. When using two or more pairs simultaneously, a difference is applied to the density of the diaphragm plates of the individual diaphragms arranged in the direction of the optical axis, and the individual diaphragms are independently driven, and the ND filter is composed in steps as the combined characteristic after passing. As a result, by using a plurality of diaphragms of the invention, the shape of the envelope of comprehensive distribution of quantity of light can be varied by the quantity of light, so that the MTF can be controlled, which is very preferable.

In the explanations herein, the shape of the diaphragm plate is curved inward in an arc shape, but other shape may be similarly used.

In the embodiments, two ND filters are operated by confronting one-dimensionally, but the quantity of light may be adjusted by using three or more filters two-dimensionally. That is, the quantity of light may be regulated by two-dimensional action of the diaphragm plate.

To compose a stepped ND filter, a plurality of ND filters with specific density (i.e., transparency ratio is constant) may be used in combination. Furthermore, a plurality of gradient ND filters may be overlaid.

As described herein, the diaphragm of the invention uses a plurality of stepped ND filters or gradient ND filters varying in density gradually, applies a difference in the quantity of each transmitted light by combining the component of broad passing luminous flux and narrow passing luminous flux, and controls the quantity of transmitted light while allowing to pass light without discarding lower order diffracted light and higher order diffracted light, so that it is possible to prevent deterioration of MTF caused by cut-off of diffraction light of higher degree diffraction light when the diaphragm is narrowed down as in the conventional diaphragm, and to keep the depth of field by the narrow component of passing luminous flux.

## Claims

1. A diaphragm device comprising a diaphragm (10) which comprises a pair of diaphragm plates (5,6;20,21;30,31) movable relative to each other, and drive means (65) for driving the diaphragm plates,
wherein at least a part of at least one of the diaphragm plates constitutes an ND filter (1,2,3,4;11,12;20,21;32,33) for causing a difference between the quantity of light passing through the central part and that passing through peripheral part of the diaphragm,
characterised in that the ND filter varies its transparency ratio across its surface.

2. A diaphragm device of Claim 1, wherein the ND filter (11,12;32,33) varies its transparency ratio stepwise accross its surface.

3. A diaphragm device of Claim 1, wherein the ND filter (20,21) varies its transparency ratio gradually across its surface.

4. An image pick-up device comprising:
a lens system (60,61) for collecting the light passing through the lens system; means (66) for evaluating the quantity of the light incident on the lens system, and generating a detection signal indicative of the evaluated quantity of the light;
opto-electric conversion means (62) for converting the light passing through the lens system to an electric signal; and
signal processing means (63) for processing the electric signal; and
a diaphragm device (10,65) in accordance with any of Claims 1-3, arranged to adjust the quantity of light collected by the lens system in accordance with said detection signal.

## Patentansprüche

1. Blendenvorrichtung mit: einer Blende (10, die ein Paar zueinander bewegliche Blendenlamellen (5, 6; 20, 21; 30, 31) und eine Antriebseinrichtung (65) zur Betätigung der Blendenlamellen umfaßt,
wobei zumindest ein Teil von mindestens einer der Blendenlamellen ein Neutralfilter ( 1, 2, 3, 4; 11, 12; 20, 21; 32, 33) bildet, damit eine Differenz zwischen der Lichtmenge, die den Mittelteil der Blende durchquert, und der Lichtmenge entsteht, die den Randbereich der Blende passiert,
**dadurch gekennzeichnet, daß** das Neutralfilter das Durchlässigkeitsverhältnis auf seiner Oberfläche ändert.

2. Blendenvorrichtung nach Anspruch 1, wobei das Neutralfilter (11, 12; 32, 33) seine Durchlässigkeit stufenweise über die Oberfläche hinweg ändert.

3. Blendenvorrichtung nach Anspruch 1, wobei das Neutralfilter (20, 21) seine Durchlässigkeit über die Oberfläche hinweg allmählich ändert.

4. Bildaufnahmegerät mit:
einem Linsensystem (60, 61), mit dem das Licht gesammelt wird, welches das Linsensystem durchquert; einer Einrichtung zum Ermitteln der auf das Linsensystem auftreffenden Lichtmenge und zum Erzeugen eines Erfassungssignals, das die ermittelte Lichtmenge angibt,
einem opto-elektrischen Umwandlungsgerät (62), mit dem das Licht, welches das Linsensystem durchquert, opto-elektrisch in ein elektrisches Signal umgewandelt wird, und
einer Signalbearbeitungseinrichtung (63) zum Bearbeiten des elektrischen Signals; und
einer Blendenvorrichtung (10, 65) gemäß einem der Ansprüche 1-3, mit der die Lichtmenge reguliert wird, welche in Übereinstimmung mit dem erfaßten Signal von dem Linsensystem gesammelt wird.

## Revendications

1. Dispositif de diaphragme comprenant un diaphragme (10) qui comprend une paire de plaques de diaphragme (5, 6 ; 20, 21 ; 30, 31) qui peuvent être déplacées l'une par rapport à l'autre, et un moyen de commande (65) pour commander les plaques de diaphragme,
dans lequel au moins une partie d'au moins une des plaques de diaphragme constitue un filtre ND (1, 2, 3, 4 ; 11, 12 ; 20, 21 ; 32, 33) pour provoquer une différence entre la quantité de lumière traversant la partie centrale et celle traversant la partie périphérique du diaphragme,
caractérisé en ce que le filtre ND varie son rapport de transparence à travers sa surface.

2. Dispositif de diaphragme selon la revendication 1, dans lequel le filtre ND (11, 12 ; 32, 33) varie son rapport de transparence par paliers à travers sa surface.

3. Dispositif de diaphragme selon la revendication 1, dans lequel le filtre ND (20, 21) varie son rapport de transparence progressivement à travers sa surface.

4. Dispositif de prise de vue d'image comprenant : un système de lentille (60, 61) pour collecter la lumière traversant le système de lentille ; un moyen (66) pour évaluer la quantité de lumière incidente sur le système de lentille, et pour générer un signal de détection indicateur de la quantité évaluée de lumière ;
un moyen de conversion opto-électrique (62) pour convertir la lumière traversant le système de lentille en un signal électrique ; et
un moyen de traitement de signal (63) pour traiter le signal électrique ; et
un dispositif de diaphragme (10, 65) selon l'une quelconque des revendications 1 à 3, disposé pour ajuster la quantité de lumière collectée par le système de lentille selon ledit signal de détection.
